# EUROPEAN PATENT APPLICATION

(11) **EP 4 455 615 A1**
(43) Date of publication of application: **30.10.2024**
(21) Application number: 23170259.8
(22) Date of filing: 27.04.2023
(51) Int. Cl.: G01D 5/04, G01D 5/14

(54) **ROTARY ABSOLUTE ENCODER, LOCK AND METHOD OF OPERATING A LOCK**

(71) Applicant: Assa Abloy Limited, Willenhall, West Midlands WV13 3PW (GB)
(72) Inventor: CHEN, Yike, Freemont, CA 94536 (US); CHANG, Richard, San Francisco, CA 94121 (US)
(74) Representative: DTS Patent- und Rechtsanwälte PartmbB

(57) **Abstract**

The invention relates to a rotary absolute encoder (1) for a lock (50), in particular door lock, comprising:
- a shaft (5) adapted to be rotated between at least a first and a second position;
- a transmission (9) coupled to the shaft (5), wherein the transmission (9) includes a thread (6) adapted to rotate with the shaft (5) around a first axis (A1) of rotation and an encoder gear (7) adapted to engage the thread (6) and to rotate around a second axis (A2) of rotation perpendicular to the first axis (A1) of rotation; and
- a magnetic encoder (2) coupled to the encoder gear (7) and adapted to output a value indicative of the angular orientation of the encoder gear (7) around the second axis (A2) of rotation. The invention also relates to a lock (50) including the rotary encoder (1) and a method of operating the lock (50).

## Description

The invention relates to the field of rotary absolute encoders which are configured to detect the angular position of a rotatable shaft including multi-rotations around the shaft. The invention in particular relates to the technical field of locks, more particularly to door locks, that are adapted to control or trigger a locking mechanism to lock and unlock a door or similar structure upon completion of a rotation around the shaft. Even more particularly, the inventive concept may be applied in the field of electronic door locks or smart locks that are configured to be retrofitted on existing door locks, like for example dead bolt locks, by mechanically and/or electromechanically coupling a lock supplied with the rotary absolute encoder to an existing locking mechanism for control thereof.

Door locks of the above-mentioned types are well established in the state of the art. US 2020/0181946 A1 for example describes a door lock having a lock drive adapted to move a lock mechanism between a locked and an unlocked position and a thumb turn coupled to the lock drive such that actuation of the thumb turn moves the lock drive. The lock drive is also configured to be moved by means of an electric drive motor which is coupled to the lock drive via a transmission. A position sensor coupled to the lock drive is furthermore adapted to detect the position of the lock drive independent of the movement of the drive motor or transmission.

WO 2022/060704 A1 discloses a door lock including a driveshaft operatively couplable to a locking mechanism including a bolt. A transmission is coupled to the driveshaft that consists of an arrangement of spur gears. A magnetic encoder coupled to the transmission is adapted to output a value indicative of the position of one of the spur gears.

The installation space in locks, in particular locks that are configured to be retrofitted to existing door locks and/or locking mechanism, is typically very limited.

In this context, in particular the spur gear arrangement of WO 2022/060704 A1 was found to be relatively demanding in terms of the required installation space.

Accordingly, there is a need for compact devices that are capable of accurately determining the position of a shaft in particular when its position is associated with locking and unlocking a locking mechanism of, for example, an associated door. In the case of multi-turn locking mechanism, there is in particular a need for compact devices that are capable of determining a degree of rotation around the shaft, in particular in an angular range corresponding to multiple revolutions of the shaft around its rotational axis.

This technical object is achieved by a rotary absolute encoder, a lock and a method comprising to the features of the independent claims.

Possible embodiments of the invention are subject matter of the dependent claims.

In one aspect of the invention, an absolute encoder for a lock, in particular door lock, is provided. The absolute encoder comprises:
- a shaft adapted to be rotated between at least a first and a second position;
- a transmission coupled to the shaft, wherein the transmission includes a thread adapted to rotate with the shaft around a first axis of rotation and an encoder gear adapted to engage the thread to rotate around a second axis of rotation perpendicular to the first axis of rotation; and
- an encoder coupled to the encoder gear and adapted to output a value indicative of the angular orientation of the encoder gear around the second axis of rotation.

A rotary absolute encoder is a device that measures the rotational position of a shaft or axle and provides a unique digital code or signal for each position. Unlike a rotary incremental encoder that provides a relative measurement of position, a rotary absolute encoder can determine the exact position of the shaft or axle. Preferably, the absolute encoder does this by providing a unique digital code or signal for each position of the shaft or axle, based on the number of tracks or bits in the encoder. Preferably, there are two types of rotary absolute encoders: single-turn and multi-turn. Single-turn encoders are used to measure the position of a shaft within one rotation, while multi-turn encoders can measure multiple rotations. Rotary absolute encoders can be either optical or magnetic, depending on the technology used to detect the position of the shaft or axle. Optical encoders use a light source and a photoelectric detector to read the code, while magnetic encoders use a magnetic sensor to detect the magnetic field generated by a magnetized disc.

The first position of the shaft may in particular be associated with a locked position of the lock. Respectively, the second position may in particular be associated with an unlocked position of the lock. The encoder gear may be a toothed wheel or otherwise be provided with a mating surface for positively engaging the thread. Preferably, the encoder gear positively engages the thread in a worm gear arrangement, in which the thread acts as the worm. This has in particular the benefit of transmitting revolutions around the first axis to revolutions around the second axis at an aspect ratio that is suitable for multi-turn locks, which typically involve locking mechanisms that lock and unlock an associated door or similar structure upon completion of several revolutions around the first axis. A suitable aspect ratio may already be attained by a very limited number of transmission elements, and may, in particular, involve only a single encoder gear engaging one thread that is adapted to rotate with the shaft. The rotary absolute encoder is particularly suited to be installed in limited installation spaces and is manufacturable at low cost. The encoder may be mechanically coupled to the encoder gear or be coupled via the electromagnetic field, and may in specific applications be embodied by a mechanical, optical or magnetic encoder.

Rotations around the first axis are coupled, by means of the worm gear type transmission described herein before, to rotations around the second axis at an aspect ratio that is particularly suited for multi-turn locks. The aspect ratio of the transmission can easily be adopted such that the angular orientation of the encoder gear around the second axis is indicative of the angular orientation of the shaft around the first axis in an angular range corresponding to a few revolutions around it. On the other hand, since the angular orientation around the second axis obtained by the encoder, in particular magnetic encoder, is indicative of the angular orientation around the first axis in an angular range determined by the aspect ratio of the transmission, multi-rotation absolute encoding is achieved. In particular, rotary absolute encoding is achieved in the sense of an immediate determination of the actual position/orientation around the first axis, including multi-turns, instead of relying on incremental data obtained by, for example, counting rotations or estimating rotations by run-time of a driving motor. Obtaining rotary absolute encoding in the sense described herein before is beneficial, since it provides reliable determination of the angular orientation around the first axis, including multi-turns, even immediately after a power loss, battery replacement, or similar event, in the control circuitry of the encoder. The rotary absolute encoder in particular provides locks with the functionality to remember whether it is in its locked or unlocked state, even after a power loss in the control circuitry, in particular in case the first position of the shaft is associated with the locked position and the second position is associated with the unlocked position of the lock or locking mechanism.

In some preferred embodiments, the encoder is a magnetic encoder, in particular non-incremental magnetic encoder.

In some exemplary embodiments, the rotary absolute encoder may beneficially be provided to control the locking mechanism of a multi-turn lock, which is configured to extend and respectively retract a bolt securing a door or a similar structure in the locked and respectively unlocked position. In particular in view of retrofitting existing door locks, the shaft may be operatively couplable, by mechanical or electromechanical means, to an existing locking mechanism configured to extend a bolt in the locked position and/or to retract a bolt in the unlocked position. In other embodiments, the rotary absolute encoder may be provided as part of a lock with the shaft being operatively coupled to, by mechanical or electromechanical means, to a locking mechanism configured to extend a bolt in the locked position and/or to retract a bolt in the unlocked position.

According to some embodiments, the thread, which may in particular have multiple starts, is provided in a circumferential section of, for example, less than 370° around the first axis. In some embodiments, the thread is exclusively provided in the circumferential section of less than 370° around the first axis. The thread is provided, in the circumferential section, for example by at least one isolated ridge or groove.

The at least one groove may have a shape corresponding to an inverted shape of the at least one ridge. The term "ridge" will be used further in this document, including the claims to designate both a long narrow raised structure or long narrow depressed structure. And indeed, in order to create a worm effect, the throat of a groove/depression preferably shows some special form that can be compared to an internal ridge (which will interact longitudinally with one tooth of the encoder gear).

The at least one isolated ridge may in particular be manufactured by adding material to the shaft or removing material from the shaft. The added material is preferably plastic or from the same material as the shaft. In some embodiments, the thread consists of, in the circumferential section, at least one isolated ridge. The at least one isolated ridge helically winds along the circumferential section.

The term "isolated" may be interpreted in the sense that the axial engagement of the encoder gear with the thread is defined, in at least a part of circumferential section, by a single isolated ridge. Even more particularly, the term "isolated" may be interpreted in the sense that the axial engagement of the encoder gear with the thread is defined, in at least a part of circumferential section, only by a single isolated ridge.

According to some embodiments, the thread has at least one overlapping region in which one end of the at least one isolated ridge is overlapping with another end of the at least one or another isolated ridge, in particular in the case of a multiple start thread. The encoder gear positively engages the thread and typically includes teeth that are outside of the overlapping region only in contact with a single isolated ridge.

More specifically, and keeping in mind that the manufacturing costs low and add or remove as less material as possible to create the isolated ridge(s), the condition above can be rephrased in that in the overlapping region(s), no more than two said isolated ridges are overlapping (in regard of the longitudinal axis of the shaft). Or that the zone where a given ridge is not overlapping any other ridge has to be kept as big as possible.

Transmission of a strong torque is an important aspect of classical worm gear systems, wherein the number of starts of the thread as well as the design of the throats (of the ridge and of the teeth) are optimized in this regard. But the strength of the torque is of no concern in this specific application, as the encoder gear aims only to capture the rotation and do not need to transmit any torque further. This is why one can afford that over most of one rotation around the axis of the shaft, one single tooth of the encoder gear is in contact with one single isolated ridge of the thread at the time. And by extension it is why one can afford to design a thread with as less material as possible, and in particular with as less as possible overlapping ridges. This make the invention much easier and cheaper to implement on any kind of shaft whose position in rotation need to be tract properly,

In some exemplary embodiments, the transmission of the absolute encoder transmits rotations of the shaft to rotations of the encoder gear, or, in other words, rotations around the first axis to rotations around the second axis, at an aspect ratio of N:1. Preferably, N is between 1 and 10. Even more preferably, N is equal 5. In other words, one revolution around the second axis typically corresponds to an angular range of N times 360° degrees around the first axis. The aspect ratio of the worm-type transmission is determined by the ratio of the number of teeth of the encoder gear and the number of starts of the thread. For example, in the case of an encoder gear with ten teeth encoder gear engaging a double- start thread, N = 10/2 = 5. The aspect ratio may be adopted to specific cases, in particular to cases in which the degree of rotation around the first axis is to be determined in an angular range of about a few revolutions around the first axis. In the case of multi-turn locks for example, a transmission of 5:1 allows for a determination of the angular orientation around the first axis in an angular range corresponding to five revolutions by determining the angular orientation of the encoder gear around the second axis.

In some embodiments, the at least one isolated ridge defines two axially adjacent thread channels that are axially confined only by the at least one isolated ridge separating them from each other. In some embodiments, the at least one ridge separates two axially adjacent thread channels of a single or a multiple-start, in particular two-start thread. The at least one isolated ridge may define two axially adjacent thread channels that are axially confined only by the at least one isolated ridge separating them in the sense that, no mechanical restrictions other than the at least one isolated ridge is interacting with the encoder gear to restrict the movement of the encoder gear in the axial direction and to retain the encoder gear in positive engagement with the thread.

The thread and the encoder gear form a worm-type arrangement. Specifically, the thread and the encoder gear may form a non-throated, single throated or double-throated worm-type arrangement.

In some specific embodiments, the at least one isolated ridge has a trapezoid cross-section, in particular a cross-section of a regular trapezoid. In other embodiments, the at least one isolated ridge has a curved section, in particular for engaging encoder teeth of corresponding shape.

In some exemplary embodiments, the at least one isolated ridge extends over an angular range of at least 90°, preferably 180°, most preferably 360° around the first axis. The thread may in particular be provided, in the circumferential section of at least 90°, preferably 180°, most preferably 360° around the first axis, by one single isolated ridge.

In some embodiments, the number of isolated ridges correspond to the number starts of the thread.

In some exemplary embodiments, the at least one isolated ridge extends an angular range around the first axis that is determined by the quotient of 360° divided by the number of starts of the thread. In case of a single or single-start thread, it is in particular preferred that the isolated ridge extends over one full revolution, or 360°, around the first axis. In the case of a double-start thread, two isolated ridges each extending over half of a revolution, or 180°, around the first axis may particularly preferred. In the case of a double-start thread, first and second isolated ridges may each define the thread over respective angular ranges of 180°. A two-start thread extending over a full angular range of 360° around the first axis may be provided by disposing the first and second isolated ridges at an angle of 180° around the first axis with respect to each other.

In some exemplary embodiments, one or more of the isolated ridges, in particular of a single-start thread or multiple-start thread, axially overlap in a region that extends over a limited angular range of less than 5°, preferably less than 2°, most preferably less than 1 °, of a full turn around the first axis of rotation. The axial overlap of the respective isolated ridges guides the encoder gear, in particular in vicinity of extremal points along the circumference around the first axis, which may correspond to an axial displacement according to the pitch or lead of the thread, in particular of the single or multiple thread. The overlap provided in the limited angular range ensures secure engagement of the encoder gear with the thread. Advantageously, such limitation of the overlapping regions ensures that as less material as possible is used for forming the thread.

In alternative embodiments, the thread is a single thread or a multiple thread. Multiple threads may in particular be adopted to attain a desired aspect ratio provided by the worm-gear type transmission of the rotary absolute encoder. In particular, a two-start thread may be utilized to attain a lead that equals two times the pitch and a modification of the aspect ratio by a factor of ½. Multiple threads, in particular double-start threads, do not require substantially more installation space than single threads and can be considered as very space efficient, which may be beneficially applied in particular in the field of door locks.

The rotary absolute encoder may for example comprise a magnetic encoder, which is coupled to the encoder gear via the electromagnetic field and configured to obtain a value indicative of the angular orientation of the encoder gear around the second axis. The value indicative of the angular orientation of the encoder gear may in particular be obtained to a sufficient accuracy by known magnetic encoders, including, for example, magneto-resistive sensors or sensors utilizing the Hall-effect. In some embodiments, the encoder gear includes a magnet and/or a magnetized section. In particular, the magnet and/or the magnetized section may be diametrically magnetized and arranged with the second axis of rotation in a coaxial agreement.

In some exemplary embodiments, the thread is disposed on an outer cylindrical circumference of the shaft for ease of manufacturing. The shaft and the thread may be made from the same material, in particular a metal, alloy or polymer. The shaft and the thread may in specific embodiments be manufactured as one piece, in particular by cutting, milling, mill-cutting or moulding at low manufacturing costs.

Another aspect of the invention relates to a lock comprising the rotary absolute encoder as described herein before. The shaft of the lock is operatively coupled to a locking mechanism configured to extend a bolt in the locked position and/or to retract a bolt in the unlocked position. Optionally, the shaft may be operatively coupled to a locking mechanism that is additionally configured to releasably retain a bolt in a latched position. The first position of the rotary absolute encoder is associated with the locked position and the second position of the rotary absolute encoder is associated with the unlocked position. The first and second positions are associated with the angular orientation of the shaft around the first axis and may in particular be separated by an angular range of several revolutions of the shaft around the first axis. The latched position may in particular relate to an angular orientation of the shaft around the first axis intermediate the locked and the unlocked position.

In some exemplary embodiments, the shaft is mechanically coupled, in particular rigidly connected to, a thumb turn of the lock. The shaft may in particular be molded to the thumb turn. The thumb turn may be manually actuated to rotate the shaft coupled thereto between the locked, unlocked and/or latched positions. In other embodiments, the shaft may be coupled to a traditional locking mechanism that may be accessed and rotated via a key. The lock may also be supplied with an electronic access control that involves an electric actuator, in particular drive motor, that is couplable to the shaft, in particular via a clutch, gears or a similar coupling mechanism, to rotate the shaft between the locked, unlocked and/or latched positions.

Another aspect of the invention relates to the use of the rotary absolute encoder, as described herein before, to operate a lock. For using the absolute encoder to operate a specific lock or locking mechanism, the first and second positions of the shaft are calibrated to correspond to a locked and an unlocked position of the respective lock or locking mechanism, in particular in an auto-calibration step.

Another aspect relates to a method of operating a lock, in particular door lock, comprising the steps of:
- rotating a shaft, between a locked and an unlocked position;
- rotating a transmission coupled to the shaft, wherein the transmission includes a thread that rotates with the shaft around a first axis of rotation and an encoder gear that engages the thread and rotates around a second axis of rotation perpendicular to the first axis of rotation; and
- obtaining, by means of a magnetic encoder coupled to the encoder gear, a value indicative of the angular orientation of the encoder gear around the second axis of rotation.

The method may in particular be implemented by utilizing the rotary absolute encoder as described herein before. The aspect ratio of the transmission coupled to the shaft is typically adopted so that one revolution of the encoder gear around the second axis corresponds to several revolutions of the shaft around the first axis. The magnetic encoder obtains a value indicative of the angular orientation of the encoder wheel, in particular by measuring the magnetic field and may generate a corresponding digital or analog output. The obtained value is also indicative of the angular orientation of the shaft around the first axis in an angular range that is determined by the transmission ratio of the transmission.

In some exemplary embodiments, the rotary absolute encoder or lock may comprise one or more processors configured to coordinate functions of the lock. The processors may be configured to execute computer-executable instructions stored in a volatile or non-volatile memory, in particular onboard memory.

In some exemplary embodiments, the method further comprises the step of:
- determining, from the obtained value indicative of the angular orientation of the encoder gear around the second axis of rotation, a degree of a multi-rotation of the shaft around the first axis of rotation.

Determination of the degree of the multi-rotation of the shaft around the first axis of rotation may in particular involve one or more processors that are configured to receive data from the magnetic encoder and/or a memory. The degree of the multi-rotation of the shaft around the first axis is in particular to be understood as the angular orientation of the shaft around the first axis in an angular range that spans more than a single revolution, i. e. more than 360°.

In the following, the invention is described in more detail with respect to specific embodiments that are illustrated in the accompanying drawings, wherein
- FIG. 1: shows an exemplary embodiment of a rotary absolute encoder for a lock, which includes a magnetic encoder and a control circuitry provided on a circuit board, in a perspective view;
- FIG. 2: is a side view of the rotary absolute encoder of FIG. 1;
- FIG. 3: is the rotary absolute encoder of FIG. 1 in another perspective view;
- FIG. 4: shows a thread of the rotary absolute encoder;
- FIG. 5: shows a detail of axially overlapping ridges defining the thread depicted in FIG. 4.

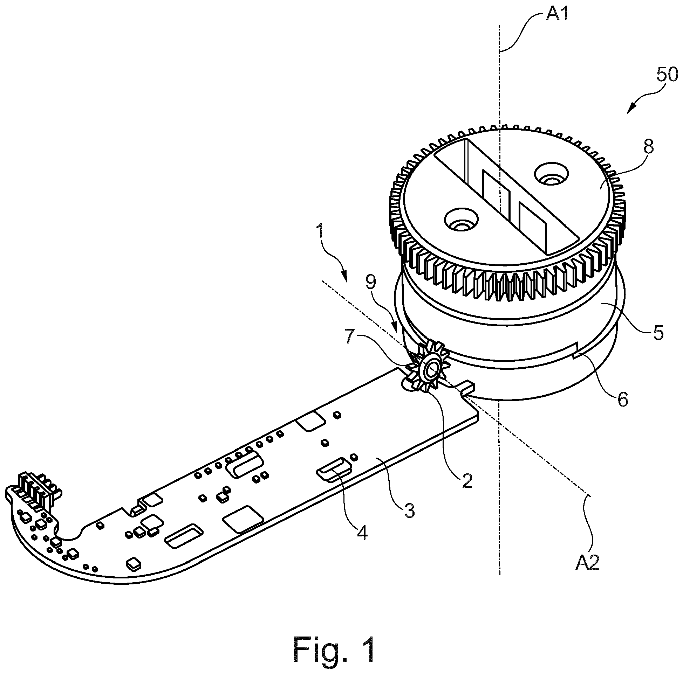

Figs. 1 to 3 show an exemplary embodiment of a rotary absolute encoder 1 for a lock 50, in particular door lock. As illustrated in Fig. 1, the rotary absolute encoder 1 includes a magnetic encoder 2 that is provided on a circuit board 3 having a control circuity and a processor 4 which are configured to execute or coordinate functions of the lock 50.

The rotary absolute encoder 1 comprises a cylindrical shaft 5 that is rotatable around a first axis of rotation A1, in particular in an angular range corresponding to multiple turns. A thread 6 is disposed around an outer circumference of the shaft 5 and rotates with the shaft 5 around the first axis of rotation A1. An encoder gear 7 positively engages the thread 6 and is adapted to rotate around a second axis of rotation A2. The first axis A1 extends along a direction that is perpendicular to the second axis A2. The shaft 5 with thread 6 and the encoder gear 7 implement a transmission 9 of the worm gear type, wherein the shaft 5 acts as the worm and the encoder gear 7 positively engaging the thread 6 as the worm wheel.

The rotary absolute encoder 1 may be provided to control the locking mechanism of a multi-turn lock 50. For example, certain functions of the lock 50 may be triggered or activated upon completion of a multi-turn rotation of the shaft 5 around the first axis A1. The rotary absolute encoder 1 utilizing the worm gear type transmission 9 is in particular capable of determining the degree of multi-rotations of the shaft 5 around the first axis of rotation A1.

The shaft 5 is rotatable around the first axis A1 between a first position and a second position. In particular in the case of multi-turn locks, the first and second position are typically separated by an angular range that involves several revolutions, wherein the first position is typically associated with a locked position and the second position with the unlocked position.

The rotary absolute encoder 1 is particularly suited for controlling the locking mechanism of a door lock, and may in particular be supplied to an existing locking mechanism that is configured to extend and respectively retract a bolt securing a door or a similar structure in the locked and respectively unlocked positions. For retrofitting, the shaft 5 may be operatively couplable, for example by mechanical or electromechanical means, to an existing locking mechanism configured to extend a bolt in the locked position and/or to retract a bolt in the unlocked position. Alternatively, the rotary absolute encoder 1 may be provided as part of a lock 50 with the shaft 5 being operatively coupled to, by mechanical or electromechanical means, a locking mechanism configured to extend a bolt in the locked position and/or to retract a bolt in the unlocked position.

The shaft 5 may, for example, be rotatable upon manual actuation and be coupled to a thumb turn or the like. In one specific embodiment, the thumb turn is molded to the shaft 5.

In the specific exemplary of Fig. 1 the shaft 5 is also adapted to be rotated by means of an electric actuator, in particular drive motor, that exerts a torque on the shaft 5 by means of a toothed gear 8 coupled thereto. The lock 50 may optionally be supplied with the electric actuator and the toothed gear 8, in particular for providing electronic access control.

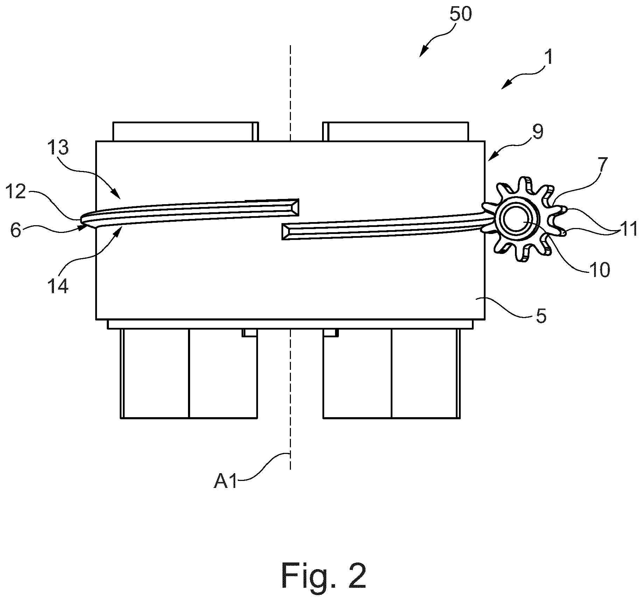

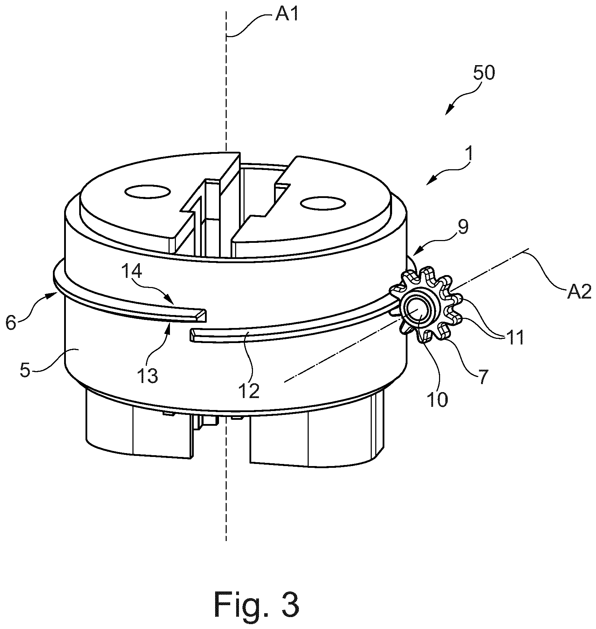

As illustrated in detail in Figs. 2 and 3, the encoder gear 7 has the shape of a toothed wheel that engages the thread 6. A magnet 10 is arranged coaxially with the second axis A2, which is the axis of rotation of the encoder gear 7. In the exemplary embodiment depicted in the figures, the magnet 10 has the shape of a ring or disc and is diametrically magnetized.

In the exemplary and non-limiting examples depicted in Figs. 2 and 3, the transmission 9 includes an encoder gear 7 that is provided with ten teeth 11 for positive engagement of the thread 6 disposed around the outer cylindrical circumference of the shaft 5. In one possible embodiment, the teeth 11 engage a thread 6 that is a single-start thread, which implements a transmission 9 with an aspect ratio of 10:1, i. e. an angular range of ten full revolutions around the first axis A1 corresponds to a single revolution around the second axis A2. In another possible embodiment, the teeth 11 engage a thread 6 that is a double-start thread, which implements a transmission 9 with an aspect ratio of 5:1, i. e. an angular range of five full revolutions around the first axis A1 corresponds to a single revolution around the second axis A2. Preferably, the transmission is configured to transmit rotations of the shaft 5 to rotations of the encoder gear 7 at an aspect ratio of N: 1, wherein N is greater than 1 and less than or equal 10. In order to attain the desired aspect ratio of N:1, both the number of teeth 11 and the number of starts of the thread 6 may be modified.

As illustrated in Figs. 1 to 3, the thread 6 is provided in a circumferential section of less than 370°, around the first axis A1. In non-limiting examples depicted in the figures the thread 6 is provided, in the circumferential section, by an isolated ridge 12. In other embodiments, and as already explained earlier, the thread may be provided, in the circumferential section, by a groove or a recessed structure that has an inverted shape.

In the examples of Figs. 1 to 3, the isolated ridge 12 helically winds along the circumferential section to define two axially adjacent thread channels 13, 14. The thread channels 13, 14 are open in the sense that they are confined in the axial direction only by the isolated ridge 12 separating them from each other.

The at least one isolated ridge 12 extends over an angular range of at least 90°, preferably 180°, most preferably 360° around the first axis A1. In specific embodiments, the isolated ridge 12 covers an angular range around the first axis A1 that is determined by the quotient of 360° and the number of starts of the thread 6, more the small angular regions where the extremities of the ridges are overlapping.

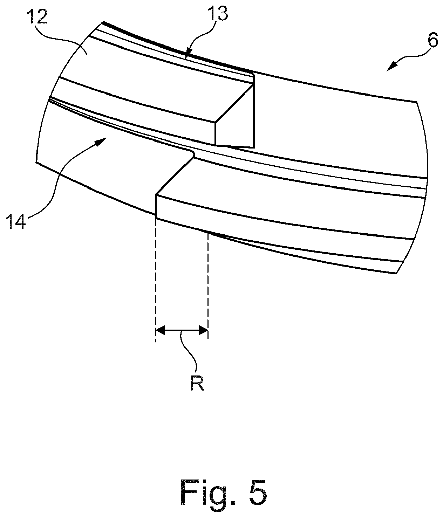

As can be seen for example in Fig. 2, the isolated ridge 12 axially overlaps in a limited angular range R or, in other words, in an overlapping region 20 of less than 5°, preferably less than 3°, most preferably less than 1° around the first axis of rotation. The overlapping region 20, which is depicted in more detail in Fig. 5, ensures positive engagement of the encoder gear 7 with the thread 6 at extremal points, in particular when the encoder gear 7 has covered a traveling distance that corresponds to the pitch or lead of the thread 6. As can also be seen from Fig. 5, the isolated ride 12 has further preferably a cross-section of a regular trapezoid for ensuring positive engagement with the thread.

In overlapping region 20, one end of the at least one isolated ridge 12 is overlapping with another end of the isolated ridge 12. Outside of the overlapping region 20, the teeth 11 of the encoder gear 7 are (20) only in contact with a single isolated ridge 12. Within the overlapping region 20, a maximum of two teeth 10 are positively engaging the isolated ridge.

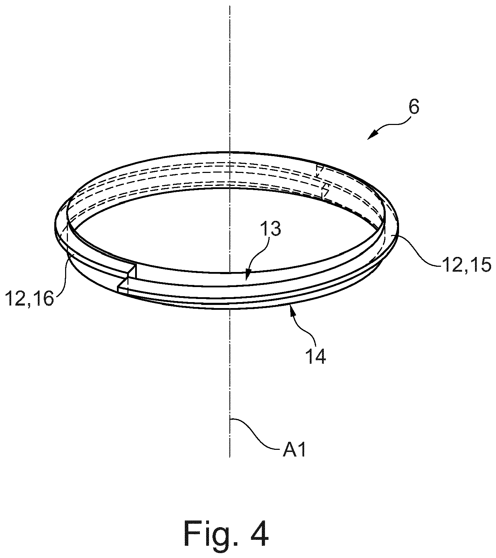

Fig. 4 illustrates a thread 6 of a specific embodiment. The thread 6 may be a separate component adapted to rotate with the shaft 5 around the first axis A1. In particular, the thread may be disposed around the outer cylindrical circumference to ensure rotation with the shaft. Most preferably, the thread 6 and the shaft 5 may be manufactured from the same material, in particular a polymer material, metal or alloy, and may be made from the same material as one piece, in particular by cutting, milling, mill-cutting or molding, to reduce manufacturing costs. Alternatively, the thread 6 can come as integral part of a muff or a sleeve which can be mounted around the shaft 5.

The thread 6 shown in Fig. 4 is a multiple thread, in particular a two-start thread. The thread 6 is provided in an angular range of 360° by first and second isolated ridges 15, 16 that respectively extend over an angular circumference of 180° around the first axis A1. The starts of the double-start thread 6 depicted in Fig. 4 are typically disposed at an angle of 180° around the first axis A1. Each of the first and second isolated ridges 15, 16 extends over an angular circumference of 180° around the first axis. The first and second ridges 15, 16 are disposed at an angle of 180° with respect to each other to provide the thread 6 over the full angular range of 360°. As indicated in Fig. 5, the first and second ridges 15, 16 axially overlap in a limited angular range R to ensure a continuous positive engagement of the encoder gear 7 with the respective first and second ridges 15, 16, in particular when the shaft 5 is rotated around its first axis A1 of rotation by more than one revolution.

In the embodiment of the double-start thread 6 shown in Fig. 4, first and second isolated ridges 15, 16 each define the thread 6 over a respective angular range of 180°. The first and second isolated ridges are disposed at an angle of 180° around the first axis with respect to each other to provide a thread 6 extending over the full angular range of 360° around the first axis.

Operating the lock 50 supplied with the absolute rotary encoder 1 involves steps of rotating the shaft 5 between a first and second position that are respectively associated with the locked and an unlocked position, thereby rotating the worm gear type transmission 9 coupled to the shaft 5. The transmission 9 typically has an aspect ratio so that a few revolutions of the shaft 5 around the first axis A1 translate to a single revolution of the encoder gear 7 around the second axis A2. Hence, the angular orientation of the encoder gear 7 around the second axis A2 is indicative of the degree of rotation around the first axis A1 in an angular range of several revolutions.

The magnetic encoder 2 determines a value indicative of the angular orientation of the encoder gear 7 around the second axis A2, which in turn determines the degree of rotation around of the shaft 5 around the first axis A1. The magnetic encoder 2 is, for example, adapted to generate an analog or digital signal representing the obtained value. In exemplary embodiments, the processor 4 is configured to determine the degree of rotation around the first axis A1 from the obtained value, in particular by executing computer-executable instructions that are stored in a memory, in particular onboard memory provided with the circuit board 3.

It is understood that the embodiments were described herein for illustrative purposes with respect to embodiments featuring isolated ridges. However, it is straightforward to apply the teachings disclosed herein also to a respective inverted structure, such that the thread 6 is embodied by respectively formed isolated grooves and, optionally, adapting the dimensions of the encoder gear 7, the shaft 5 and/or thread 6 accordingly.

### Reference signs

- 1: rotary absolute encoder
- 2: magnetic encoder
- 3: circuit board
- 4: processor
- 5: shaft
- 6: thread
- 7: encoder gear
- 8: gear
- 9: transmission
- 10: magnet
- 11: tooth
- 12: ridge
- 13: thread channel
- 14: thread channel
- 15: first ridge
- 16: second ridge
- 20: overlapping region
- A1: first axis
- A2: second axis
- R: limited angular range

## Claims

1. A rotary absolute encoder (1) for detecting the angular position of a rotatable shaft, comprising:
a shaft (5) adapted to be rotated between at least a first and a second position;
a transmission (9) coupled to the shaft (5), wherein the transmission (9) includes a thread (6) adapted to rotate with the shaft (5) around a first axis (A1) of rotation and an encoder gear (7) adapted to engage the thread (6) and to rotate around a second axis (A2) of rotation perpendicular to the first axis (A1) of rotation; and
an encoder (2) coupled to the encoder gear (7) and adapted to output a value indicative of the angular orientation of the encoder gear (7) around the second axis (A2) of rotation.

2. The rotary absolute encoder (1) according to claim 1, wherein the thread (6) is provided in a circumferential section around the first axis (A1) and thread (6) is provided, in the circumferential section, by at least one isolated ridge (12) that helically winds along the circumferential section.

3. The rotary absolute encoder (1) according to any one of the previous claims, wherein the thread (6) has at least one overlapping region (20) in which one end of the at least one isolated ridge (12) is overlapping with another end of the at least one or another isolated ridge (12), wherein the encoder gear (7) includes teeth (11) that are outside of the at least one overlapping region (20) only in contact with a single isolated ridge (12).

4. The rotary absolute encoder (1) according to claim 3, wherein in each of the said at least one overlapping region, no more than two said isolated ridges are overlapping.

5. The rotary absolute encoder (1) according to any one of the previous claims, wherein the number of isolated ridges (12) corresponds to the number of starts of the thread (6).

6. The rotary absolute encoder (1) according to any one of the previous claims, wherein the overlapping region (20) extends over an angular range of less than 5°, preferably less than 2°, most preferably 1° around the first axis (A1).

7. The rotary absolute encoder (1) according to any one of the previous claims, wherein the transmission (9) transmits rotations of the shaft (5) to rotations of the encoder gear (7) at an aspect ratio of N:1, wherein N is preferably between 1 and 10, most preferably equal 5.

8. The rotary absolute encoder (1) according to any one of the previous claims, wherein the circumferential section extends over an angular range of less than 370° around the first axis (A1).

9. The rotary absolute encoder (1) according to any one of the previous claims, wherein the at least one isolated ridge (12) defines two axially adjacent thread channels (13, 14) that are axially confined only by the isolated ridge (12) separating them from each other.

10. The rotary absolute encoder (1) according to any of the previous claims, wherein the encoder is a magnetic encoder and the encoder gear (7) comprises a magnet (10) and/or a magnetized section.

11. The rotary absolute encoder (1) according to claim 10, wherein the magnet (10) and/or the magnetized section are diametrically magnetized and arranged with the second axis (A2) of rotation in a coaxial agreement.

12. The rotary absolute encoder (1) according to any of the previous claims, wherein the at least one ridge (12) is disposed on an outer cylindrical circumference of the shaft (5).

13. The rotary absolute encoder (1) according to any of the previous claims, wherein the shaft and the at least one ridge (12) are manufactured as one piece, in particular by cutting, milling, mill-cutting or moulding.

14. A lock (50) comprising a rotary absolute encoder (1) according to any of the previous claims, wherein the shaft (5) is operatively coupled to a locking mechanism configured to extend a bolt in the locked position and to retract a bolt in the unlocked position.

15. A method of operating a lock (50), in particular the lock of claim 14, comprising the steps of:
- rotating a shaft (5) between a locked and an unlocked position;
- rotating a transmission (9) coupled to the shaft (5), wherein the transmission (9) includes a thread (6) that rotates with the shaft (5) around a first axis (A1) of rotation and an encoder gear (7) that engages the thread (6) and rotates around a second axis (A2) of rotation perpendicular to the first axis (A1) of rotation; and
- obtaining, by means of an encoder (2) coupled to the encoder gear (7), a value indicative of the angular orientation of the encoder gear (7) around the second axis of rotation.
